# FASCICULE DE BREVET EUROPEEN

(11) **EP 2 218 566 B1**
(45) Date de publication et mention de la délivrance du brevet: **04.01.2012**
(21) Numéro de dépôt: 09300006.5
(22) Date de dépôt: 29.04.2009
(51) Int. Cl.: B29C 33/48, B29C 70/86

(54) **Procédé de fabrication par moulage sous pression d'une pièce composite à structure monolithique creuse**
Herstellungsverfahren durch Druckformguss eines Verbundwerkstücks mit monolithischer Hohlstruktur
Method for manufacturing a composite part with a hollow monolithic structure by moulding under pressure

(30) Priorité: 13.02.2009 FR 0950921
(43) Date de publication de la demande: 18.08.2010
(73) Titulaire: Carbone Forge S.A.S., 69210 Lentilly (FR)
(72) Inventeur: Duqueine, Vincent, 69370, SAINT DIDIER AU MONT D'OR (FR)
(74) Mandataire: Rhein, Alain

(56) Documents cités:
- GB-A- 587 282
- US-A- 5 262 113

## Description

La présente invention entre dans le domaine de la fabrication de pièces en matériau composite constitué de fibres noyées dans une matrice thermoplastique ou thermodurcissable.

Elle a pour objet un procédé de fabrication par moulage sous pression d'une pièce composite à structure monolithique creuse, ainsi que la pièce obtenue par ce procédé.

Parmi les procédés connus de fabrication par moulage sous pression de pièces en matériau composite à matrice thermoplastique ou thermodurcissable présentant une structure creuse, l'un consiste, d'une part, à mouler sous pression une partie de la pièce creuse à réaliser, en utilisant une forme interne et une forme externe et, d'autre part, à mouler parallèlement l'autre partie de ladite pièce, puis à assembler les deux parties par collage ou par d'autre procédés de solidarisation, afin de reconstituer la pièce souhaitée. Une pièce creuse fabriquée selon un tel procédé ne permet pas de garantir, lorsque cela est nécessaire, une continuité des fibres de renforts au niveau de la jonction des deux parties, ce qui est préjudiciable aux performances mécaniques de ladite pièce. Un tel procédé est décrit dans les brevets GB 587282 A et US 5 262 113 A.

Un autre procédé connu consiste à mouler le matériau composite sous pression sur un noyau fusible, ce dernier étant évacué après moulage, au travers d'un orifice pratiqué dans la pièce. Ces procédés de fabrication sont généralement limités à une certaine classe de matériaux composites dont les températures de mise en oeuvre doivent impérativement être compatibles avec celles des noyaux fusibles utilisés.

D'autre part, ces noyaux fusibles ne permettent pas de garantir la forme interne de la pièce, laquelle peut, selon la nature dudit noyau, s'effondrer à partir d'un certain niveau de pression. En effet, les procédés actuels de moulage sous pression peuvent faire appel à de très hautes pressions, allant jusqu'à 200 bars par exemple tel que décrit dans le brevet EP 1 382 436 au nom du présent inventeur.

Il n'existe pas actuellement de procédé de fabrication par moulage sous pression d'un matériau composite constitué de fibres noyées dans une matrice thermoplastique ou thermodurcissable, permettant d'obtenir une pièce à structure monolithique creuse.

La présente invention a pour but de proposer un procédé de fabrication permettant de remédier à cette carence, ainsi que la pièce obtenue par ce procédé.

Le procédé de fabrication par moulage sous pression d'une pièce composite à structure monolithique creuse dans le domaine de la fabrication de pièces en matériau composite constitué de fibres noyées dans une matrice thermoplastique ou thermodurcissable, consiste à réaliser les étapes successives suivantes :
- moulage, dans un matériau composite, constitué de fibres et d'une matrice thermoplastique ou thermodurcissable, d'au moins un conteneur ouvert, ainsi que d'un bouchon de fermeture dudit conteneur ouvert,
- remplissage total dudit conteneur ouvert avec un matériau incompressible se présentant sous forme de poudre, et comportant des propriétés de tenue à des températures supérieures à la température de fusion du matériau composite dont est fait ledit conteneur ouvert,
- fermeture dudit conteneur avec ledit bouchon,
- enveloppement dudit conteneur fermé avec un matériau composite constitué de fibres et d'une matrice thermoplastique ou thermodurcissable,
- moulage de la pièce sous pression en utilisant comme noyau ledit conteneur fermé et chargé,
- après démoulage, perçage d'au moins trou dans la pièce, et extraction dudit matériau incompressible par ledit trou.

Selon une caractéristique additionnelle du procédé selon l'invention, on utilise pour la réalisation du conteneur, un matériau composite qui présente une tenue à la température supérieure ou égale à celle du matériau composite utilisé pour la réalisation de la pièce.

Si cette caractéristique peut paraître évidente pour des matériaux composites à matrice thermodurcissable, il n'en est pas de même pour les matériaux composites à matrices thermoplastiques. On a toutefois constaté qu'en utilisant, par exemple, le même matériau composite à matrice thermoplastique pour réaliser le conteneur et la pièce, c'est-à-dire ayant la même température de fusion, la montée à température de fusion du conteneur lors du moulage sous pression de la pièce finale, n'avait aucune incidence sur la forme finale dudit conteneur, et plus particulièrement sur celle de sa cavité interne.

Selon une autre caractéristique additionnelle du procédé selon l'invention, le matériau incompressible se présentant sous forme de poudre consiste en de la poudre de verre de faible granulométrie.

Selon une autre caractéristique additionnelle du procédé selon l'invention, on réalise le moulage du conteneur sur un noyau métallique.

Selon une autre caractéristique additionnelle du procédé selon l'invention, on utilise plus d'un conteneur dans la réalisation d'une pièce afin de créer dans celle-ci plus d'une cavité.

Selon une autre caractéristique additionnelle du procédé selon l'invention, avant l'enveloppement des conteneurs fermés avec un matériau composite constitué de fibres et d'une matrice thermoplastique ou thermodurcissable, on relie lesdits conteneurs entre eux au moyen de fibres de renfort.

Les avantages et les caractéristiques du procédé selon l'invention, ressortiront plus clairement de la description qui suit et qui se rapporte au dessin annexé, lequel en représente un mode de réalisation non limitatif.

Dans le dessin annexé :
- les figures 1, 2, 3 et 4 représente des vues schématiques en perspective illustrant des étapes successives du procédé de fabrication d'une pièce en matériau composite selon l'invention.
- la figure 5 représente une vue schématique en coupe transversale la pièce à fabriquer au cours du procédé selon l'invention.
- la figure 6 représente une vue schématique en perspective illustrant une autre étape du même procédé.
- la figure 7 représente une vue schématique en perspective et en coupe longitudinale de la pièce obtenue par le procédé selon l'invention.

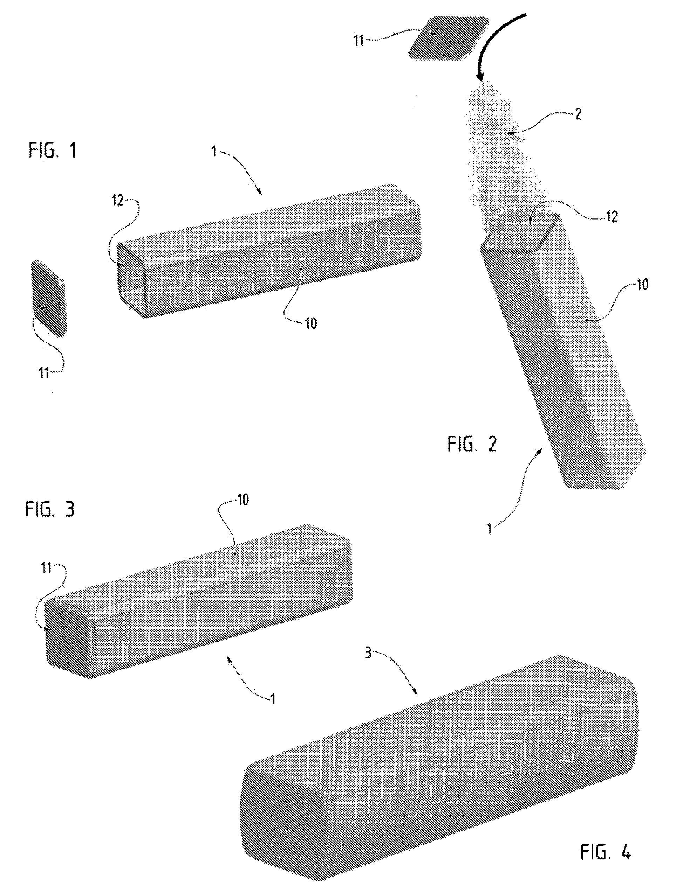

En référence à la figure 1, on peut voir que les deux premières étapes du procédé de fabrication consistent en la fabrication d'un conteneur 1, comprenant une partie ouverte 10 et un bouchon 11 adapté, notamment au travers d'une forme complémentaire, de manière à permettre de fermer la partie ouverte 10 pour former le conteneur 1.

La partie ouverte 10 et le bouchon 11 sont réalisés dans un matériau composite constitué de fibres noyées dans une matrice thermoplastique ou thermodurcissable, de préférence ils sont réalisés dans le même matériau composite.

La partie ouverte 10 est obtenue par moulage sur un noyau, de préférence métallique, permettant de créer une cavité interne 12, laquelle peut présenter différentes formes, même complexes. Le bouchon 11 est également obtenu par moulage, il présente un profil adapté à permettre une fermeture étanche de la partie ouverte 10.

En référence à la figure 2, on peut voir que l'étape suivante du procédé selon l'invention consiste à remplir la partie ouverte 10 avec un matériau incompressible 2 se présentant sous forme de poudre, et qui comporte des propriétés de tenue à des températures supérieures à celle de fusion du matériau composite dont est faite la partie ouverte 10.

De manière avantageuse ce matériau 2 utilisé consiste en de la poudre verre, en sorte de pouvoir traiter tous les matériaux composites connus.

Par ailleurs, le matériau 2 utilisé présente de préférence une granulométrie très réduite, en sorte de garantir un remplissage optimal de la partie ouverte 10.

Après remplissage total, le bouchon 11 est assujetti à la partie ouverte 10. Dans le cas de matériaux composites à matrice thermodurcissable, le bouchon 11 peut être collé, tandis que dans le cas d'une matrice thermoplastique, il peut être prévu un montage ajusté associé à un serrage spécifique.

On obtient ainsi le conteneur 1 représenté sur la figure 3, et qui consiste en une enveloppe fermée réalisée en matériau composite, dont la cavité interne 12, non visible, est remplie de matériau 2.

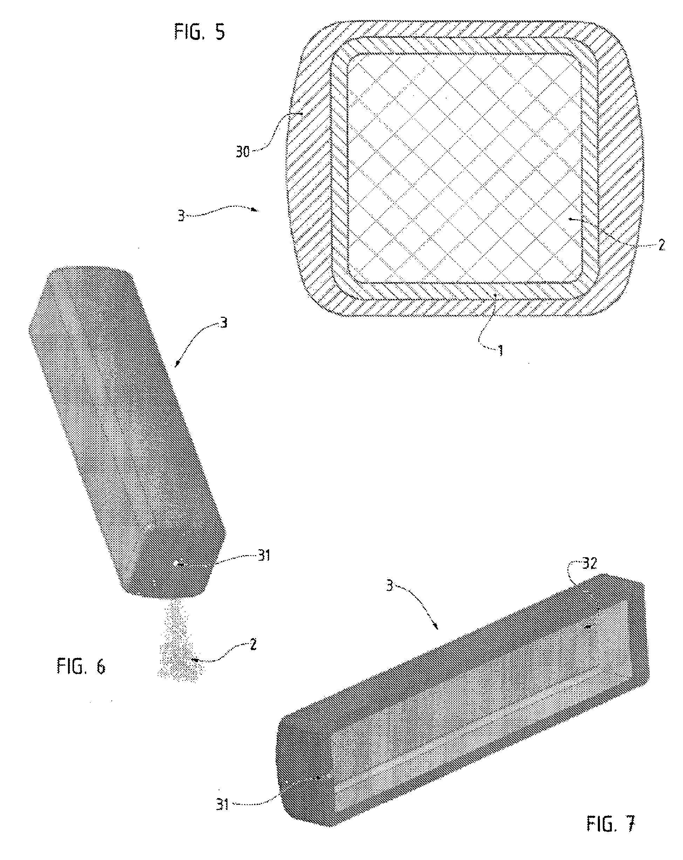

Ce conteneur 1 est destiné à constituer le noyau de la pièce 3 à fabriquer, représentée sur la figure 4. Le conteneur 1 a ainsi été enveloppé d'une couche 30 de matériau composite constitué de fibres de renfort et d'une matrice thermoplastique ou thermodurcissable, comme cela est visible sur la figure 5, pour constituer une enveloppe monolithique qui garantit une continuité des fibres de renfort.

L'ensemble ainsi constitué est ensuite moulé en étant soumis à dans des conditions particulières de température et de pression, selon un procédé de moulage sous pression tel que, non limitativement, celui décrit dans le brevet EP 1 382 436.

Lors de cette opération de moulage sous haute pression, le conteneur 1 conserve toute son intégrité et ne s'effondre pas du fait de son remplissage avec le matériau 2.

Après consolidation de la pièce 3, on y pratique un trou 31, comme cela est visible sur la figure 6, afin de permettre l'évacuation du matériau 2.

Il y a lieu de remarquer qu'il est possible qu'il soit nécessaire, selon la nature et/ou la complexité de la forme de la pièce à fabriquer, d'avoir à pratiquer plusieurs trous. De même, il est possible après extraction du matériau 2, de boucher le ou les trous 31.

Selon la nature du matériau ou des matériaux du conteneur 1 et de la couche 30, il peut y avoir fusion entre elles des différentes parties qui composent la pièce 3.

Ainsi, dans le cas d'un conteneur 1 fait d'une matrice thermoplastique, il peut y avoir lors de l'opération de moulage, fusion du bouchon 11 avec la partie ouverte 10.

Dans le cas d'utilisation des matériaux thermoplastiques identiques pour le conteneur 1 et la couche 30, il peut s'opérer une fusion complète permettant d'obtenir une pièce 3 dont la structure monolithique creuse composée d'un seul et même matériau composite, et qui comporte une cavité 32 qui n'est autre que la cavité 12, comme cela est représenté sur la figure 7.

Le procédé selon l'invention permet de fabriquer des pièces composites à structure monolithique creuse, sans discontinuité des fibres de renfort.

On notera que les fibres de renfort peuvent être disposées, non limitativement, en nappes ou bien enroulées en continu selon une ou plusieurs directions choisies, également sans discontinuité.

On notera également que le procédé selon l'invention permet de fabriquer des pièces comprenant chacune plus d'une cavité, où chacune des cavités est obtenue au travers d'un conteneur 1. De manière avantageuse, lors de la mise en place de la couche 30, les différents conteneurs 1 destinés à créer chacun une cavité, pourront être reliés les uns aux autres au moyen de fibres de renfort, se présentant sous forme de tresses par exemple, en sorte de renforcer la cohésion de la pièce à fabriquer.

## Revendications

1. Procédé de fabrication par moulage sous pression d'une pièce (3) composite à structure monolithique creuse dans le domaine de la fabrication de pièces en matériau composite constitué de fibres noyées dans une matrice thermoplastique ou thermodurcissable, qui consiste à réaliser les étapes successives suivantes :
- moulage, dans un matériau composite constitué de fibres et d'une matrice thermoplastique ou thermodurcissable, d'au moins un conteneur ouvert (10) ainsi que d'un bouchon (11) de fermeture dudit conteneur ouvert (10),
- remplissage total dudit conteneur ouvert (10) avec un matériau incompressible (2) se présentant sous forme de poudre, et comportant des propriétés de tenue à des températures supérieures à la température de fusion du matériau composite dont est fait ledit conteneur ouvert (10),
- fermeture dudit conteneur (10) avec ledit bouchon (11),
- enveloppement dudit conteneur fermé (1) avec un matériau composite (30) constitué de fibres et d'une matrice thermoplastique ou thermodurcissable,
- moulage de la pièce (3) sous pression en utilisant comme noyau ledit conteneur fermé et chargé (1),
- après démoulage, perçage d'au moins un trou (31) dans ladite pièce (3), et extraction dudit matériau incompressible (2) par ledit trou (31).

2. Procédé selon la revendication 1, **caractérisé en ce qu'**on utilise pour la réalisation du conteneur (1), un matériau composite qui présente une tenue à la température supérieure ou égale à celle du matériau composite utilisé pour la réalisation de la pièce (3).

3. Procédé selon la revendication 1 ou la revendication 2, **caractérisé en ce que** le matériau incompressible (2) se présentant sous forme de poudre consiste en de la poudre de verre de faible granulométrie.

4. Procédé selon l'une quelconque des revendications précédentes, **caractérisé en ce qu'**on réalise le moulage du conteneur (10) sur un noyau métallique.

5. Procédé selon l'une quelconque des revendications précédentes, **caractérisé en ce qu'**on utilise plus d'un conteneur (10) dans la réalisation d'une pièce (3) afin de créer dans celle-ci plus d'une cavité (32).

6. Procédé selon la revendication 5, **caractérisé en ce que**, avant l'enveloppement des conteneurs fermés (1) avec un matériau (30) composite constitué de fibres et d'une matrice thermoplastique ou thermodurcissable, on relie lesdits conteneurs (1) entre eux au moyen de fibres de renfort.

7. Pièce composite à structure monolithique creuse, sans discontinuité des fibres de renfort **caractérisé en ce qu'**elle est obtenue par le procédé selon l'une quelconque des revendications précédentes.

## Claims

1. Method for manufacturing through pressure moulding a composite part (3) with a hollow monolithic structure in the field of the manufacture of parts made out of composite material formed of fibres embedded in a thermoplastic or thermosetting matrix, consisting in performing the following successive steps:
- moulding, in a composite material formed of fibres and a thermoplastic or thermosetting matrix, at least one open container (10) as well as a plug (11) for closing said open container (10),
- completely filling said open container (10) with a non-compressible material (2), which is in the form of powder and has a resistance to temperatures higher than the melting temperature of the composite material out of which said open container (10) is made,
- closing said container (10) with said plug (11),
- wrapping said closed container (1) in composite material (30) formed of fibres and a thermoplastic or thermosetting matrix,
- moulding the part (3) under pressure while using said closed and filled container (1) as a core,
- after removal from the mould, drilling at least one hole (31) in said part (3) and extracting said non-compressible material (2) through said hole (31).

2. Method according to claim 1, wherein is used, for producing the container (1), a composite material having a temperature resistance higher than or equal to that of the composite material used for manufacturing the part (3).

3. Method according to claim 1 or claim 2, wherein the non-compressible material (2), which is in the form of powder, is glass powder with small grain size.

4. Method according to any of the preceding claims, wherein the moulding of the container (10) is carried out on a metallic core.

5. Method according to any of the preceding claims, wherein more than one container (10) is used for manufacturing a part (3), in order to create in the latter more than one cavity (32).

6. Method according to claim 5, wherein, before wrapping the closed container (1) in a composite material (30) formed of fibres and a thermoplastic or thermosetting matrix, said containers (1) are connected to each other by means of reinforcing fibres.

7. Composite part with a hollow monolithic structure without discontinuity of the reinforcing fibres, wherein it is obtained according to the method of any of the preceding claims.

## Patentansprüche

1. Herstellungsverfahren durch Druckformguss eines Verbundwerkstücks (3) mit monolithischer Hohlstruktur in dem Bereich der Herstellung von Werkstücken aus Verbundwerkstoff, bestehend aus Fasern, die in einer thermoplastischen oder duroplastischen Matrize eingebettet sind, das darin besteht, die nachstehenden aufeinanderfolgenden Arbeitsschritte auszuführen:
- Formen aus einem Verbundwerkstoff, der aus Fasern und einer thermoplastischen oder duroplastischen Matrize besteht, von zumindest einem offenen Behälter (10) sowie von einem Stopfen (11) zur Schließung des besagten offenen Behälters (10),
- komplettes Auffüllen des besagten offenen Behälters (10) mit einem nicht komprimierbaren Werkstoff (2), der in Pulverform vorliegt und Beständigkeitseigenschaften bei Temperaturen aufweist, die höher sind als die Schmelztemperatur des Verbundwerkstoffs, aus welchem der besagte offene Behälter (10) gefertigt ist,
- Verschließen des besagten Behälters (10) mit dem besagten Stopfen (11),
- Umwickeln des besagten geschlossenen Behälters (1) mit einem Verbundwerkstoff (30), der aus Fasern und aus einer thermoplastischen oder duroplastischen Matrize besteht,
- Formen des Stückes (3) unter Druck, indem der besagte geschlossene und aufgefüllte Behälter (1) als Kern benutzt wird,
- nach dem Herausnehmen aus der Form zumindest ein Loch (31) in dem besagten Werkstück (3) durchbohren und den besagten nicht komprimierbaren Werkstoff (2) durch das besagte Loch (31) entnehmen.

2. Verfahren nach Anspruch 1, **dadurch gekennzeichnet, dass** für die Herstellung des Behälters (1) ein Verbundwerkstoff benutzt wird, der Beständigkeitseigenschaften bei Temperaturen aufweist, die größer sind als oder gleich groß sind wie jene des Verbundwerkstoffs, der für die Herstellung des Werkstücks (3) benutzt wird, aufweist.

3. Verfahren nach Anspruch 1 oder Anspruch 2, **dadurch gekennzeichnet, dass** der nicht komprimierbare Werkstoff (2), der in Pulverform vorliegt, aus Glaspulver mit kleiner Korngröße besteht.

4. Verfahren nach irgendeinem der vorgehenden Ansprüche, **dadurch gekennzeichnet, dass** das Formen des Behälters (10) auf einem metallischen Kern erfolgt.

5. Verfahren nach irgendeinem der vorgehenden Ansprüche, **dadurch gekennzeichnet, dass** mehr als ein Behälter (10) bei der Herstellung eines Stückes (3) benutzt wird, um in diesem letzteren mehr als einen Hohlraum (32) zu schaffen.

6. Verfahren nach Anspruch 5, **dadurch gekennzeichnet, dass** vor dem Umwickeln der geschlossenen Behälter (1) mit einem Verbundwerkstoff (30), der aus Fasern und einer thermoplastischen oder duroplastischen Matrize besteht, die besagten Behälter (1) mithilfe von Verstärkungsfasern untereinander verbunden werden.

7. Verbundwerkstück mit monolithischer Hohlstruktur ohne Unterbrechung im Verlauf der Verstärkungsfasern, **dadurch gekennzeichnet, dass** es nach dem Verfahren gemäß irgendeinem der vorgehenden Ansprüche hergestellt ist.
